# EUROPEAN PATENT SPECIFICATION

(11) **EP 3 344 032 B1**
(45) Date of publication and mention of the grant of the patent: **02.08.2023**
(21) Application number: 16840879.7
(22) Date of filing: 13.06.2016
(51) Int. Cl.: A01G 9/24, A01G 9/26, F21V 29/56, F21V 29/74, A01G 7/04, A01G 9/20, F21V 17/10, F21V 17/16, F21Y 115/10

(54) **LIGHTING SYSTEM FOR GROWING OF PLANTS**
BELEUCHTUNGSSYSTEM FÜR PFLANZENZUCHT
SYSTÈME D'ÉCLAIRAGE POUR LA CULTURE DE PLANTES

(30) Priority: 04.09.2015 FI 20155637
(43) Date of publication of application: 11.07.2018
(73) Proprietor: Netled Oy, 38970 Lauhala (FI)
(72) Inventor: KIVIOJA, Niko-Matti, Siivikkala 33470 (FI)
(74) Representative: Kangasmäki, Reijo Holger
(86) International application number: PCT/FI2016/050418
(87) International publication number: WO 2017/037332

(56) References cited:
- EP-A1- 1 933 602
- WO-A2-2005/089477
- US-A1- 2008 062 694
- US-A1- 2009 308 586
- US-A1- 2011 037 369
- US-A1- 2011 037 369
- US-A1- 2011 183 368
- US-A1- 2011 183 368
- US-A1- 2012 111 954
- US-A1- 2013 003 382

## Description

The invention relates to a lighting system for growing of plants according to the preamble of the independent claim directed thereto.

For growing of plants, conventional LED-lighting production pertains difficult practical problems especially considering the rather ordinary manual manufacturing methods where for example the LED-component used for the lighting is glued or fastened with screw joint to, for example, an aluminum frame. When a screw joint is used, a heat conductive paste or tape is installed between the LED-component and the aluminum frame. This type of an intermediate layer is required due to the surface of aluminum not being perfectly even, thus regardless of the screw joint, there remains an air gap between the parts diminishing the heat transfer. The heat conducting material layer evens out the irregularities of the surface of aluminum and establishes a solid heat conducting connection between the forementioned parts.

In this kind of an implementation, the aluminum frame works as a cooling element for the LED, whereby in this context it is characteristic that the cooler the LED is, the brighter it is lit, providing also the longest possible service life. The advantage of aluminum as the frame material is its heat transmitting ability, whereas disadvantageous is its thermal expansion, and in certain applications its electrical conductivity. However, the most important reason for water cooling especially in the growing of plants is the prevention of increase in indoor climate temperature. Provided that heat isn't being removed from the lamp efficiently enough, it is conducted to air that results in the rise of cultivation temperature, quality issues and decline in production.

For the forementioned purpose, there is on the market for example by a company Lemnis Orion, a LED lamp especially developed for the growing of plants that has a LED light source and its water cooling integrated in one and the same lamp frame. This type of solution provides also high power output of the LED light source wihout overheating of the lamp.

A problem in these types of solutions is that separate fastening beams must be installed in the growth space in order to fasten the lamps. Furthermore, each lamp needs to be also connected to a separate water cooling network. Thus, this type of solution has rather high installation, acquisition and operating costs. Also, this type of lamps' service and maintenance is also particularly demanding due to lamp specific water couplings. On the other hand, this type of solution doesn't make it possible to control the circumstances in the growth space especially in order to optimize the plants' growth environment by adjusting the temperature of the growth space. In this context, also the high number of water couplings in the plants' growth space increases the risk of catastrophic leaks.

The solutions presented in US 2011/0183368 and US 2011/0037369 disclose lighting systems for growing of plants, wherein the systems of the former and the latter comprise a lighting arrangement consisting of several electric lamps, having electric components that bring about a light function, and a cooling arrangement for cooling down the light producing components of the lamps due to heat being generated by the lamps while producing light.

In the system of the latter, the lighting system is arranged to be utilized in connection with the cooling arrangement being separate with respect to the lamps of the lighting arrangement and comprising a cooling structure, being made of a heat conducting plastic, metallic and/or magnetic material. The lamps belonging to the lighting arrangement comprise a mechanical fastening frame, being coupled in a built-in manner in connection with its electric components, such as LEDs, in order to attach the lamps externally against an outer surface of the cooling structure for cooling the lamps conductively through the cooling structure.

It is the aim of the lighting system for growing of plants according to the present invention to provide decisive improvement to the forementioned problems and thus to raise essentially the level of prior art in this field. To achieve this aim, the lighting system for growing of plants according to the present invention is characterized by what is presented in the characterizing part of the independent claim directed thereto.

Among the most important advantages of the lighting system for growing of plants according to the present invention are its ease of use and the simplicity as well as efficiency of the techniques compatible with it, thanks to which thus in a variety of different growth circumstances and environments it is possible to considerably simplify the assembly and maintenance as well as to optimize the circumstances of the growth space as an advantageous embodiment by utilizing a circulation process of a cooling medium.

Thus, thanks to the invention, there is no need for a separate hanging arrangement for the lamps, which is made possible by utilizing as an advantageous embodiment of the invention a cooling structure being supported fixedly in the growth space that has in respect with each other in one or more parallel and/or on top of each other existing parts in connection with the plants. The lamps of the lighting system may be fastened to the cooling structure in a detachable manner by placing one or more lamps, when viewed in a cross-section, parallelly at the same point in the longitudinal direction of the cooling structure and furthermore a needed number of lamps successively in freely chosen points in the longitudinal direction of the cooling structure. The invention also makes it possible to integrate for example inexpensive commercial water cooling systems with the LED-lighting.

By virtue of the invention, it is furthermore possible to simplify construction of the LED lamps of the lighting arrangement, because thanks to the same it is not required to equip them with separate cooling structures, such as with a lamp specific liquid cooling circulation, on heat sink principle or on ribbed cooler principle or accordingly. By virtue of the invention, a lamp of the lighting arrangement may comprise in its simplest form a built-in mechanical fastening frame by means of which the lamp may be fastened removably to the cooling structure by means of a built-in mechanical and/or a magnetic fastening arrangement or, for example, by separate fastening springs etc. In the cooling according to the invention, it is also possible to optimize the mutual heat conduction between the fastening frame and the cooling structure thanks to an adequately wide and even heat conducting surface present in the cooling structure, which makes it possible to position the lamps in the cooling structure freely in radial direction, when viewed in a cross-section.

Thus, the invention makes possible a significantly more cost effective solution for growing plants compared to current technology regarding acquisition, installation and operating costs that enables bringing about in connection with the lighting simultaneously also the controlling of physical circumstances of the growth space for example by providing an optimal temperature and humidity for the plants being grown at any given time.

Other advantageous embodiments for the lighting system for the growing of plants according to the invention are presented in the dependent patent claims directed thereto.

In the following description the invention is demonstrated in detail with reference to the appended drawings, in which
- in figures 1a - 1c: are shown some exemplary alternative implementation principles of the lighting system according to the invention,
- in figure 2: is shown a general operating principle of a lighting system being provided with a cooling based on a medium circulation flow,
- in figures 3a - 3d: are shown some exemplary uses of the lighting system according to the invention in different growth purposes in the growing of plants,
- in figure 4: are shown two alternatives in the utilizing of the lighting system according to the invention especially in connection with a cooling arrangement being used in multilayer cultivation and,
- in figures 5a - 5 c: are shown furthermore some advantageous cooling solutions of the lighting system according to the invention.

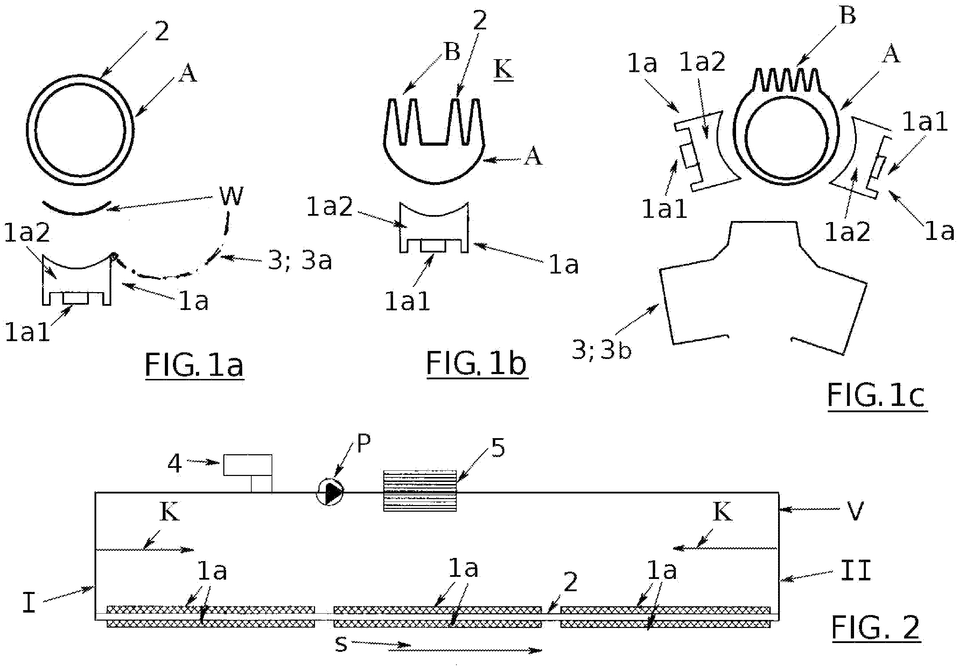

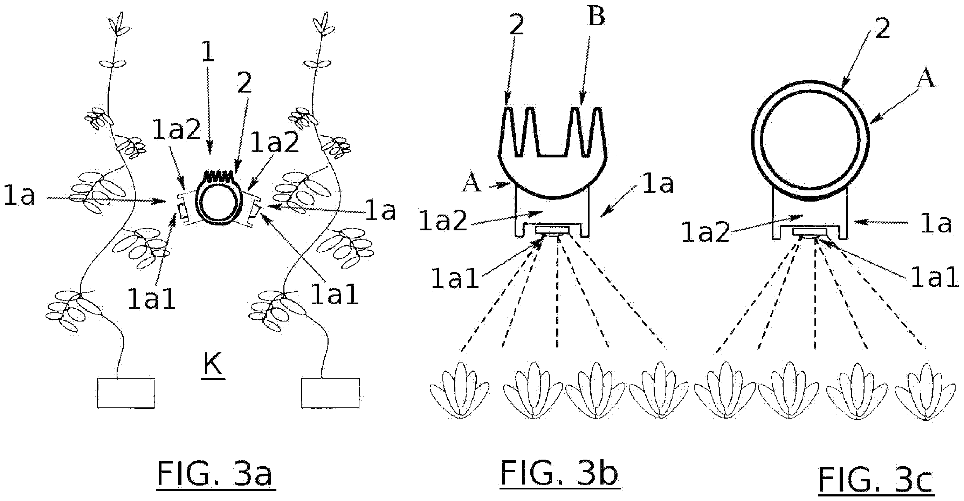

The invention relates to a lighting system for growing of plants, wherein the system comprises a lighting arrangement arranged in connection with the plants, which consists of several, preferably on external power supply operable, electric lamps 1a, having one or more electric components 1a1 that bring about a light function, and a cooling arrangement at least for cooling down the light producing components of the lamps due to heat being generated by the same while producing light. The lighting system is arranged to be utilized in connection with a cooling arrangement, being separate with respect to the lamps 1a of the lighting arrangement and, comprising e.g. with reference to the general operating principle shown in figure 2 a cooling structure 2, being installed in connection with the plants e.g. on the principle as shown in figures 3a-3d, and being made of a heat conducting plastic, metallic and/or magnetic material, wherein a lamp 1a belonging to the lighting arrangement comprises a mechanical fastening frame 1a2, being coupled on the principle shown particularly in figures 1a-1d in a built-in manner in connection with its one or more electric components 1a1, such as LEDs or like, in order to attach the lamp externally against an outer surface of the cooling structure 2, preferably on its heat conducting contact surface A, for cooling the lamp conductively through the cooling structure 2.

The invention makes possible controlling of temperature in a growth space, in addition to which it is also possible to utilize the invention for example in a way that the temperature in a water circulation is being kept lower than the air temperature, whereby the thermal energy in the air is thus being recovered in addition to the direct cooling of the lamps.

As an advantageous embodiment according to the invention, especially with reference to the exemplary alternatives shown in figures 1a - 1c, 3a - 3c and 5a - 5c, the lamp 1a comprises a fastening arrangement 3 for coupling the lamp with a specially designed or standard-dimensioned bar, pipe and/or profile, acting as the cooling structure 2 and being installed in connection with the plants, wherein the cross section thereof stays constant essentially uninterruptedly in the growth space K of the plants and, in which the lamp is installable at a freely chosen point in longitudinal direction s thereof and in radial direction when view in a cross section thereof. In this context it is possible to enhance, if needed, heat conduction between the cooling structure 2 and the fastening frame 1a2 according to figure 1a by using a suitable medium W, such as grease, thermal grease/ silver paste or the like between the forementioned parts. In this context, the uninterrupted continuing of the cooling structure 2 with an essentially constant cross-section means that its cross-section stays constant among consecutive lamps, in other words that the cooling structure is not led one by one to each lamp.

Thus, especially with reference to the advantageous embodiments shown in figures 1c and 3c, by virtue of the invention it is thus possible to place for example multiple lamps 1a on the outer surface of the cooling structure 2 in a freely chosen point in the radial direction when viewed in a cross-section, in order to direct the lamp/ lamps as required facing down, to sides and/or upwards. Placing a lamp on the heat radiating surface B i.e. on the cooling fins of the cooling structure according to figures 1b, 1c and 3b, is disadvantageous because in that case the fastening frame must be equipped with a profile corresponding to the cooling fins. In that case, the mutual heat conduction between the cooling structure and the fastening frame remains easily unsatisfactory.

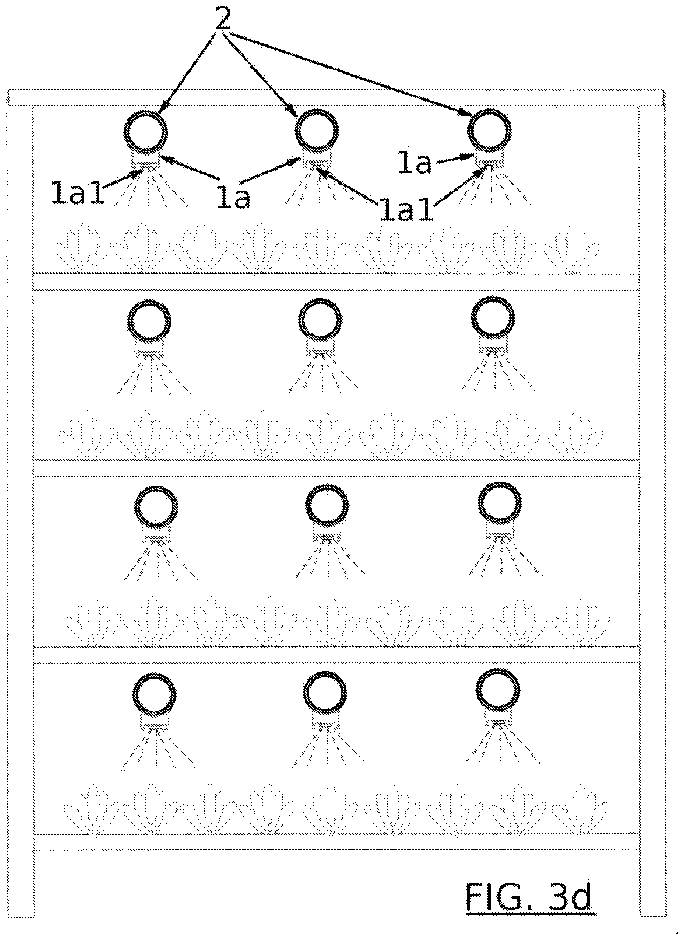

As a further advantageous embodiment of the invention, the lighting system comprises a cooling structure 2, being supported stationarily in the growth space K of the plants and being in connection with the plants, e.g. on the principle manifesting itself in figure 3d illustrating multilayer cultivation, in one or more with respect to each other parallel and/or on top of each other existing parts, in which the lamps 1a of the lighting arrangement are fastened removably by a mechanic and/or magnetical coupling arrangement 3, by coupling one or more lamps with the cooling structure 2 parallelly at one and the same point in its longitudinal direction s and/or when necessary furthermore a suitable number of lamps successively in respect with each other.

In figure 3a is shown a utilization of the invention when using two-sided lighting placed between the plants, and in figures 3b, 3c respectively when using conventional overhead lighting for example in lighting of lettuces and flowers or seedlings.

In this context as a further advantageous embodiment of the lighting system according to the invention, the mechanical coupling arrangement 3 is arranged e.g. on the principle manifesting itself in figure 1a by fastening means 3a, being provided integrally, such as in an articulated, spring loaded and/or a corresponding manner, to the fastening frame 1a2 of the lamp 1a. On the other hand, especially with reference to the embodiment shown in figure 1c, the mechanical coupling arrangement 3 may be implemented alternatively also with separate fastening means 3b, such as coupling springs or the like that enable fastening of one or two (or when necessary for simultaneous coupling of a larger amount of) lamps. In this context as a further advantageous embodiment, it is possible to exploit in connection with a cooling structure made of magnetic material, also magnetic fastening means. In such embodiments mentioned above, the spring loaded and/or magnetic fastening means increase the heat contact between the cooling structure and the lamp by virtue of pressing force thereof.

In this context, as a further advantageous embodiment of the lighting system according the invention especially referring to figures 1a, 1c, 2, 3a, 3c, 3d, 4 and 5a - 5c, the cooling arrangement is at least partially arranged medium cooled V, most profitably water circulated, by using a cooling structure 2 with a hollow cross section. In this case, the lighting system comprises as a further advantageous embodiment on the principle shown in figure 2 control automation 4 to adjust operating temperature of the lamps 1a and/or of the temperature of the plant growth space by adjusting the temperature of the circulating medium V of the cooling arrangement or its flow speed and/or in a corresponding manner.

In this context, it is furthermore possible to equip the lighting system with a recovery arrangement 5 in order to recover heat that gets transferred into the medium V of the cooling arrangement in a pump driven P medium circulation process. In the recovery, the cooling medium of the lamp is circulated through a heat exchanger, where the medium cools down typically some degrees. The heat pump raises the collected thermal energy at a high temperature, in which some other circulating medium used for heating can be heated up, or for example store the heat into a buffer.

Especially in figures 1c and 3a - 3d are shown further embodiments of the lighting system, in which the cooling arrangement is arranged in a way at least making possible hybrid function by exploiting a cooling structure 2 with cooling fins B and that has a hollow cross section. This enables the implementation of the cooling of the lamps by means of the cooling structure 2, when necessary, so to say passively i.e. by exploiting natural convection or additionally so to say actively i.e. internally in the cooling structure by exploiting forced convection when utilizing a suitable cooling medium circulation. Additionally, the hybrid structure makes it possible to collect process heat away from the growth space by cooling the surrounding air by means of the fins B of the cooling structure.

The lighting system according to the invention is particularly well suitable for multi-layer cultivation, where growth production lines are on top of each other e.g. as shown in figure 3d. Then the plants are planted e.g. in gutters at a first end of a production line from where they move e.g. by means of pressure medium or electrically operated appliances to a second end of the production line, wherein the plants grow to harvest age while moving from the first end to the second end of the production line. At the second end the plants are being collected and cut/ packed for selling. There is also a variation of this system, in which the plants move to the second end, move automatically to a higher or lower layer, and return back on the same to the "operating end". Especially a multi-layer production line enables a process-like and fully automated vegetable production.

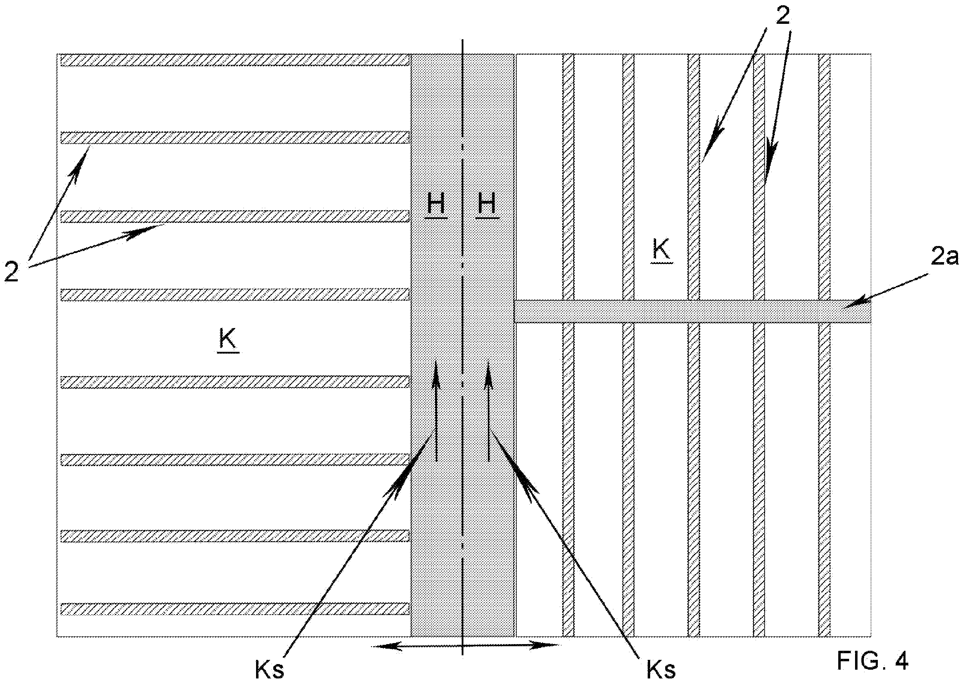

Referring especially to the forementioned multilayer cultivation, in figure 4 is shown two alternative multi-layer growth production lines as seen from above, in which the one on the left side shows a lighting system according to the invention being exploited with a delivery piping of the cooling medium, i.e. in practice most advantagously cooling water, being crosswise in respect with the longitudinal direction Ks of the growth space K, and respectively the one on the right side in figure 4 having a delivery piping in longitudinal direction Ks of the growth space K.

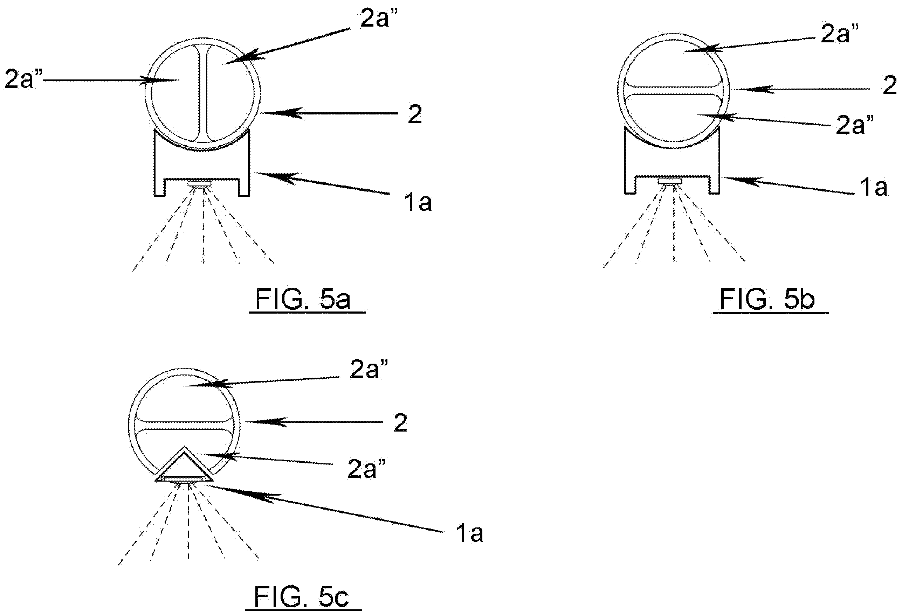

As a further advantageous embodiment of the aforementioned types of embodiments, the cooling arrangement includes on the principle manifesting itself in figure 2 e.g. a feed and return piping I,II of the cooling medium and a delivery piping in the growth space K being joined with the above, which for its part consists e.g. on the principle manifesting itself in figure 3d of one or more hollow cooling structures 2 being parallel and/or on top of each other. Referring to the advantageous embodiments shown in figures 5a and 5c, the cooling structure 2 comprises as a further advantageous embodiment in one and the same cross section at least two flow channels 2a", wherein in one channel takes place a feed flow from feed piping I and in the other channel takes place a return flow to return piping II.

In this context as a further advantageous embodiment it is possible to exploit as the cooling structure 2 a tube profile that comprises in addition to or instead of the aforementioned flow channels, a one or multi part underpressure space in order to suck water being condensed on the surface of the tube profile inside the same, and/or a one or multi part internal space, a surface groove and/or the like e.g. for the cabling of the lamps or for a corresponding purpose. As a further advantageous embodiment, it is possible to provide the surface of the tube profile with a coupling arrangement in order to enable fastening of the same to the growth space and/or to fasten therein a device intended for the watering of plants, such as a mist nozzle or the like. A tube profile of the above-described type with a continuously uniform cross-section may be manufactured e.g. by extrusion.

The cross section of the tube profile is advantageously circumferential, which enhances especially thread and pressure mount couplings to be applied with it, for example for coupling of a reverse chamber at an end of each cooling structure, by means of which a feed flow is changed into a return flow. The circumferential cross section also makes in other ways easier the assembly of the cooling structure of the lighting system according to the invention by exploiting advantageously when possible suitable quick connect couplings.

The above described type of cooling structure 2 is especially advantageous in that respect that the growth space 2 may be equipped as shown in figure 4 with a service area H on one side, where it is possible to place the piping of the cooling arrangement as well as other operating, control and electric techniques related to the maintenance of the growth space. This kind of an implementation frees up the outer sides/ ends thanks to the cooling water returning from the end of each delivery pipe functioning as the cooling structure 2, back to its feed end through the second flow channel 2a". In the example on the right side in figure 4, the cooling water is being brought with a feed line 2a that is led to the center part of the growth space K.

Especially in the implementations according to figures 5b and 5c, the upper flow channel 2a" is at a lower temperature. Because the free convection is strongest on the upper surface of the pipe, with this arrangement it is possible to minimize heat transmission taking place directly from the pipe into the outdoor air. Especially in the embodiment according to figure 5c, the lamp frame and the lowermost flow channel in the pipe are optimized in a way, which minimizes convective heat transmission into air and maximizes heat transmission into the medium. In the implementation according to figure 5a, the starting point is on the other hand such that the delivery pipe is by the whole length thereof at an extremely steady temperature, thanks to which undesired high temperature alterations, nor excessive condensation may not get generated in the growth space.

It is clear that the invention is not limited to the aforementioned or above explained embodiments, but instead it can be modified within the basic idea in various ways e.g. depending on the lighting circumstances and requirements of the plants at any give time. In addition to LED-lamps or instead of them, it is naturally possible to use a variety of different light producing techniques such as e.g. laser, OLED-lamps, LEC-lamps, quant points, plasma, halogen and induction lamps.

For example plasma lamps are based on an argon or sulfur core glowed by micro waves resulting in a glow with a sun-like light.

Furthermore especially incandescent lamps, induction lamps and halogen lamps are based on the same phenomenon, all of the above being used currently already in the lighting of plants.

In LEC (Light Emitting Capacitor) technique a fluorescent insulating material starts to glow in an electric field, which technique is being used for example in the backlighting of displays. OLED, LEC, LED and quant point technique are all based on electroluminescent phenomenon. Of other light sources that come into question may furthermore be mentioned discharge lamps, such as Xenon, HPS, MH and fluorescent tubes.

## Claims

1. Lighting system for growing of plants in a plant growth space (K), the system comprising a lighting arrangement consisting of several, preferably on external power supply operable electric lamps (1a), having one or more electric components (1a1) that bring about a light function, and a cooling arrangement at least for cooling down the light producing components of the lamps due to heat being generated by the lamps while producing light, wherein the lighting system is arranged to be utilized in connection with the cooling arrangement being separate with respect to the lamps (1a) of the lighting arrangement and comprising a cooling structure (2), being made of a heat conducting plastic, metallic and/or magnetic material, wherein the lamps (1a) belonging to the lighting arrangement comprise a mechanical fastening frame (1a2), being coupled in a built-in manner in connection with its one or more electric components (1a1), such as LEDs or like, in order to attach the lamps externally against an outer surface (A) of the cooling structure (2) for cooling the lamps conductively through the cooling structure (2), and wherein the cross section of the cooling structure stays constant essentially uninterruptedly in the plant growth space (K) and, in which the lamps are installable at a freely chosen point in longitudinal direction (s) thereof and/or in radial direction, when viewed in a cross section thereof, **characterized in that**,the cooling arrangement includes:
a feed and return piping (I,II) for a cooling medium in liquid form that is connected with a delivery piping in the plant growth space (K), wherein the delivery piping acting as the cooling structure (2) comprises a pipe that has in one and the same cross section at least two flow channels (2a") at least for a feed flow of the cooling medium from the feed piping (I) in one of the channels and for a return flow thereof to the return piping (II) in another channel thereof,
and/or
the cooling structure (2) that has a heat radiating surface (B) with cooling fins.

2. Lighting system according claim 1, **characterized in that**, the cooling structure (2) comprises a specially designed or standard-dimensioned bar, pipe and/or profile.

3. Lighting system according claim 1 or 2, **characterized in that**, the cooling structure (2) is supported stationarily in the plant growth space (K) in one or more with respect to each other parallel and/or on top of each other existing parts, in which the lamps (1a) of the lighting arrangement are fastened removably by a mechanical and/or magnetical coupling arrangement (3), by coupling one or more lamps parallelly with the cooling structure (2) at one and the same point in its longitudinal direction (s) and/or one after another with respect to each other.

4. Lighting system according to claim 3, **characterized in that**, the mechanical coupling arrangement (3) is arranged by fastening means (3a), being provided integrally, such as in an articulated, spring loaded and/or a corresponding manner, to the fastening frame (1a2) of the lamp (1a).

5. Lighting system according to claim 3 or 4, **characterized in that**, the mechanical coupling arrangement (3) is arranged by separate fastening means (3b), such as coupling springs or the like.

6. Lighting system according to any of the preceding claims 1-5, **characterized in that**, the lighting arrangement is at least partly arranged medium cooled (V) by water circulation.

7. Lighting system according to claim 6, **characterized in that**, it comprises a control automation (4) for adjusting operating temperature of the lamps (1a) of the lighting arrangement and/or temperature of the plant growth space (K), by regulating temperature or flow speed of the circulation medium (V) of the cooling arrangement.

8. Lighting system according to claim 6 or 7, **characterized in that**, it comprises a recovery arrangement (5) for recovering of heat getting transferred to the circulation medium (V) of the cooling arrangement.

9. Lighting system according to any of the preceding claims 1-8, **characterized in that**, the cooling of the lighting arrangement is arranged in a way that at least makes possible hybrid function thereof by exploiting the lighting arrangement in connection with the cooling structure (2) that has a hollow cross section and that is provided with the heat radiating surface (B) with cooling fins.

10. Lighting system according to any of the preceding claims 1-9, **characterised in that**
the plants are arranged to be grown on multi-layer principle by moving the plants in the growth space (K) in layers on top of each other in longitudinal direction (Ks) of the plant growth space in one or opposite directions,
wherein the delivery piping of the cooling medium is arranged in a crosswise direction with respect to the longitudinal direction (Ks) of the plant growth space (K).

11. Lighting system according to any of the preceding claims 1-9, **characterised in that** the plants are arranged to be grown on multi-layer principle, by moving the plants in the plant growth space (K) in layers on top of each other in longitudinal direction (Ks) of the plant growth space in one or opposite directions, wherein the delivery piping of the cooling medium is arranged in the longitudinal direction (Ks) of the plant growth space (K).

## Patentansprüche

1. Beleuchtungssystem für Pflanzenzucht in einem Pflanzenwachstumsraum (K), wobei das System eine Beleuchtungsanordnung umfasst, die aus mehreren, vorzugsweise mit externer Energieversorgung betreibbaren elektrischen Lampen (1a) besteht, die eine oder mehrere elektrische Komponenten (1a1) aufweisen, die eine Lichtfunktion bewirken, und eine Kühlanordnung zumindest zum Abkühlen der Wärme der lichterzeugenden Komponenten der Lampen, die von den Lampen während der Lichterzeugung erzeugt wird, wobei das Beleuchtungssystem so angeordnet ist, dass es in Verbindung mit der Kühlanordnung verwendet wird, die in Bezug auf die Lampen (1a) der Beleuchtungsanordnung getrennt ist und eine Kühlstruktur (2) umfasst, die aus einem wärmeleitenden Kunststoff, metallischen und/oder magnetischen Material hergestellt ist, wobei die zu der Beleuchtungsanordnung gehörenden Lampen (1a) einen mechanischen Befestigungsrahmen (1a2) aufweisen, der in Verbindung mit einer oder mehreren elektrischen Komponenten (1a1), wie beispielsweise LEDs oder dergleichen, in eingebauter Weise gekoppelt ist, um die Lampen von außen an einer Außenfläche (A) der Kühlstruktur (2) zu befestigen und durch die Kühlstruktur (2) zu kühlen, und wobei der Querschnitt der Kühlstruktur konstant im Wesentlichen ununterbrochen im Pflanzenwachstumsraum (K) bleibt und in dem die Lampen an einem frei gewählten Punkt in Längsrichtung (s) davon und/oder in radialer Richtung, in einem Querschnitt davon betrachtet, installierbar sind, **dadurch gekennzeichnet, dass** die Kühlanordnung:
eine Zu- und Rückleitung (I, II) für ein Kühlmedium in flüssiger Form umfasst, die mit einer Zuführleitung im Pflanzenwachstumsraum (K) verbunden ist, wobei die als Kühlstruktur (2) wirkende Zuführleitung ein Rohr umfasst, das in ein und demselben Querschnitt mindestens zwei Strömungskanäle (2a") zumindest für einen Zufluss des Kühlmediums aus der Zuleitung (I) in einem der Kanäle und für einen Rückfluss desselben zur Rückleitung (II) in einem anderen Kanal desselben aufweist,
und/oder
die Kühlstruktur (2), die eine wärmeabstrahlende Oberfläche (B) mit Kühlrippen aufweist, umfasst.

2. Beleuchtungssystem nach Anspruch 1, **dadurch gekennzeichnet, dass** die Kühlstruktur (2) aus einem speziell konstruierten oder standardmäßig dimensionierten Stab, Rohr und/oder Profil besteht.

3. Beleuchtungssystem nach Anspruch 1 oder 2, **dadurch gekennzeichnet, dass** die Kühlstruktur (2) im Pflanzenwachstumsraum (K) in einem oder mehreren parallel zueinander und/oder übereinander liegenden Teilen, in denen die Lampen (1a) der Beleuchtungsanordnung durch eine mechanische und/oder magnetische Kupplungsanordnung (3) lösbar befestigt sind, stationär gelagert ist, indem eine oder mehrere Lampen parallel zur Kühlstruktur (2) an ein und derselben Stelle in deren Längsrichtung (s) und/oder nacheinander zueinander gekoppelt sind.

4. Beleuchtungsanlage nach Anspruch 3, **dadurch gekennzeichnet, dass** die mechanische Kupplungsanordnung (3) durch Befestigungsmittel (3a) angeordnet ist, die beispielsweise mithilfe eines Gelenks, federbelastet und/oder auf entsprechende Weise fest in dem Befestigungsrahmen (1a2) der Lampe (1a) eingebaut sind.

5. Beleuchtungssystem nach Anspruch 3 oder 4, **dadurch gekennzeichnet, dass** die mechanische Kupplungsanordnung (3) durch separate Befestigungsmittel (3b), wie Kupplungsfedern oder dergleichen, angeordnet ist.

6. Beleuchtungssystem nach einem der vorhergehenden Ansprüche 1 bis 5, **dadurch gekennzeichnet, dass** die Beleuchtungsanordnung zumindest teilweise mit Wasserkreislauf mediumgekühlt (V) angeordnet ist.

7. Beleuchtungssystem nach Anspruch 6, **dadurch gekennzeichnet, dass** es eine Steuerautomatik (4) zur Einstellung der Betriebstemperatur der Lampen (1a) der Beleuchtungsanordnung und/oder der Temperatur des Pflanzenwachstumsraums (K) durch Regelung der Temperatur oder der Strömungsgeschwindigkeit des Zirkulationsmediums (V) der Kühlanordnung umfasst.

8. Beleuchtungssystem nach Anspruch 6 oder 7, **dadurch gekennzeichnet, dass** es eine Rückgewinnungsvorrichtung (5) zur Rückgewinnung von auf das Zirkulationsmedium (V) der Kühlanordnung übertragener Wärme umfasst.

9. Beleuchtungssystem nach einem der vorhergehenden Ansprüche 1 bis 8, **dadurch gekennzeichnet, dass** die Kühlung der Beleuchtungsanordnung so angeordnet ist, dass sie zumindest eine Hybridfunktion ermöglicht, indem die Beleuchtungsanordnung in Verbindung mit der Kühlstruktur (2) genutzt wird, die einen hohlen Querschnitt aufweist und die mit der wärmeabstrahlenden Oberfläche (B) mit Kühlrippen versehen ist.

10. Beleuchtungssystem nach einem der vorhergehenden Ansprüche 1 bis 9, **dadurch gekennzeichnet, dass** die Pflanzen zur Anzucht nach dem Mehrschichtprinzip angeordnet sind, indem die Pflanzen im Wachstumsraum (K) in Längsrichtung (Ks) des Pflanzenwachstumsraumes in einer oder entgegengesetzten Richtungen schichtweise übereinander bewegt werden, wobei die Zuführleitung des Kühlmediums quer zur Längsrichtung (Ks) des Pflanzenwachstumsraumes (K) angeordnet ist.

11. Beleuchtungssystem nach einem der vorhergehenden Ansprüche 1 bis 9, **dadurch gekennzeichnet, dass** die Pflanzen nach dem Mehrschichtprinzip herangezogen werden, indem die Pflanzen im Pflanzenwachstumsraum (K) in Längsrichtung (Ks) des Pflanzenwachstumsraumes in einer oder in entgegengesetzten Richtungen schichtweise übereinander bewegt werden, wobei die Zuführleitung des Kühlmediums in Längsrichtung (Ks) des Pflanzenwachstumsraumes (K) angeordnet ist.

## Revendications

1. Système d'éclairage pour la culture de plantes dans un espace de culture de plantes (K), le système comprenant un dispositif d'éclairage composé de plusieurs lampes électriques (1a) fonctionnant de préférence sur une source d'alimentation électrique externe, ayant un ou plusieurs composants électriques (1a1) apportant une fonction d'éclairage, et un dispositif de refroidissement au moins pour le refroidissement des composants produisant la lumière des lampes en raison de la chaleur générée par les lampes durant la production de lumière, dans lequel le système d'éclairage est conçu pour être utilisé en connexion avec le dispositif de refroidissement séparé des lampes (1a) du dispositif d'éclairage et comprenant une structure de refroidissement (2), composée d'un matériau thermoconducteur plastique, métallique et/ou magnétique, où les lampes (1a) faisant partie du dispositif d'éclairage comprennent un cadre de fixation mécanique (1a2), accouplé de façon intégrée en connexion avec son ou ses composants électriques (1a1), tels que LED ou similaire, afin de fixer les lampes extérieurement à une surface extérieure (A) de la structure de refroidissement (2) pour refroidir les lampes par conduction via la structure de refroidissement (2), et où la section transversale de la structure de refroidissement reste constante essentiellement sans interruption dans l'espace de culture de plantes (K) et où les lampes peuvent être installées à un point librement choisi dans son sens longitudinal (s) et/ou dans le sens radial, vu dans sa section transversale, **caractérisé par le fait que** le dispositif de refroidissement comprend :
une tuyauterie d'alimentation et de retour (I, II) pour un agent de refroidissement liquide, connecté à une tuyauterie de distribution dans l'espace de culture de plantes (K), où la tuyauterie de distribution qui fait fonction de structure de refroidissement (2) comprend un tuyau ayant dans une seule et même section transversale au moins deux canaux de flux (2a") au moins pour un flux d'alimentation de l'agent de refroidissement provenant de la tuyauterie d'alimentation (I) dans un des canaux et pour un flux de retour correspondant vers la tuyauterie de retour (II) dans un autre canal du tuyau,
et/ou
la structure de refroidissement (2) qui a une surface de rayonnement de chaleur (B) avec ailettes de refroidissement.

2. Système d'éclairage décrit dans la revendication 1, **caractérisé par le fait que** la structure de refroidissement (2) comprend une barre, un tube et/ou un profil spécialement conçus ou de dimension standard.

3. Système d'éclairage décrit dans la revendication 1 ou 2, **caractérisé par le fait que** la structure de refroidissement (2) est soutenue de façon stationnaire dans l'espace de culture de plantes (K) dans une ou plusieurs parties existantes parallèles ou superposées les unes par rapport aux autres, dans lesquelles les lampes (1a) du dispositif d'éclairage sont fixées de manière amovible par un dispositif d'accouplement (3) mécanique et/ou magnétique, en accouplant une ou plusieurs lampes parallèlement à la structure de refroidissement (2) à un seul et même point dans son sens longitudinal (s) et/ou l'une derrière l'autre.

4. Système d'éclairage décrit dans la revendication 3, **caractérisé par le fait que** le dispositif d'accouplement mécanique (3) est organisé à l'aide de moyens de fixation (3a), intégralement livrés, tels que des articulations, des ressorts et/ou d'une manière correspondante, sur le cadre de fixation (1a2) ou la lampe (1a).

5. Système d'éclairage décrit dans la revendication 3 ou 4, **caractérisé par le fait que** le dispositif d'accouplement mécanique (3) est assuré à l'aide de moyens de fixation séparés (3b), tels que des ressorts d'accouplement ou un moyen similaire.

6. Système d'éclairage décrit dans une quelconque des revendications précédentes 1 à 5, **caractérisé par le fait que** le dispositif d'éclairage est au moins partiellement refroidi au fluide (V) par circulation d'eau.

7. Système d'éclairage décrit dans la revendication 6, **caractérisé par le fait qu'**il comprend une automatisation du contrôle (4) pour ajuster la température de service des lampes (1a) du dispositif d'éclairage et/ou la température de l'espace de culture de plantes (K), par régulation de la température ou du débit du fluide de circulation (V) du dispositif de refroidissement.

8. Système d'éclairage décrit dans la revendication 6 ou 7, **caractérisé par le fait qu'**il comprend un dispositif de récupération (5) pour la récupération de la chaleur transférée au fluide de circulation (V) du dispositif de refroidissement.

9. Système d'éclairage décrit dans une quelconque des revendications précédentes 1 à 8, **caractérisé par le fait que** le refroidissement du dispositif d'éclairage est organisé d'une façon qui permet au moins sa fonction hybride en utilisant le dispositif d'éclairage en connexion avec la structure de refroidissement (2) dont la section est creuse et qui est fourni avec la surface de rayonnement de chaleur (B) avec ailettes de refroidissement.

10. Système d'éclairage décrit dans une quelconque des revendications précédentes 1 à 9, **caractérisé par le fait que** les plantes sont disposées pour être cultivées selon un principe multicouches en déplaçant les plantes dans l'espace de culture (K) en couches superposées dans le sens de la longueur (Ks) de l'espace de culture de plantes dans une même direction ou des directions opposées, où la tuyauterie de distribution de l'agent de refroidissement est disposée dans le sens transversal par rapport au sens de la longueur (Ks) de l'espace de culture de plantes (K) .

11. Système d'éclairage décrit dans une quelconque des revendications précédentes 1 à 9, **caractérisé par le fait que** les plantes sont disposées pour être cultivées selon un principe multicouches en déplaçant les plantes dans l'espace de culture (K) en couches superposées dans le sens de la longueur (Ks) de l'espace de culture de plantes dans une même direction ou des directions opposées, où la tuyauterie de distribution de l'agent de refroidissement est disposée dans le sens de la longueur (Ks) de l'espace de culture de plantes (K).
